**Europäisches Patentamt**

**European Patent Office**

**Office européen des brevets**

(19)

(11) Veröffentlichungsnummer : **0 024 608**

**B2**

(12) NEUE EUROPÄISCHE PATENTSCHRIFT

(45) Veröffentlichungstag der neuen Patentschrift :
20.01.88

(21) Anmeldenummer : 80104711.9

(22) Anmeldetag : 09.08.80

(51) Int. Cl.⁴ : **B 29 B   7/30**

ERRATUM

(SEITE, SPALTE, ZEILE)
(PAGE, COLUMN, LINE)
(PAGE, COLONNE, LIGNE)

| DIE TEXTSTELLE : TEXT PUBLISHED : LE PASSAGE SUIVANT : | | | | LAUTET BERICHTIGT : SHOULD READ : DEVRAIT ETRE LU : |
|---|---|---|---|---|
| 242 vorgesehenen Ringraum 256 | 4 | 6 | 13 | 242 vorgesehenen Ringraum 256 in die Rücklaufleitung 257, die in den Vorratsbehälter 202 mündet. Durch Umsteuern der Düsennadel 243 mittels des hydraulischen Antriebs 245 fährt die Düsennadel 243 gegen den Anschlag 250, verschließt den Ringraum 256 |

Tag der Entscheidung über die Berichtigung
Date of decision on rectification:
Date de décision portant
)
)
)
)
22.06.88

Ausgabe- und Veröffentlichungstag:
Issue and publication date:
Date d'édition et de publication:
)
)
)
)
12.10.88

Patbl.Nr:)
EPB no:) .88/41
Bull. no:)

**Europäisches Patentamt**

**European Patent Office**

**Office européen des brevets**

(19)

(11) Veröffentlichungsnummer : **0 024 608**
**B2**

(12) **NEUE EUROPÄISCHE PATENTSCHRIFT**

(45) Veröffentlichungstag der neuen Patentschrift :
**20.01.88**

(51) Int. Cl.⁴ : **B 29 B   7/30**

(21) Anmeldenummer : **80104711.9**

(22) Anmeldetag : **09.08.80**

(54) **Verfahren und Einrichtung zum Herstellen von Formteilen aus einem Massiv- oder Schaumstoff bildenden, fliessfähigen Reaktionsgemisch.**

(30) Priorität : **24.08.79 DE 2934350**

(43) Veröffentlichungstag der Anmeldung :
**11.03.81 Patentblatt 81/10**

(45) Bekanntmachung des Hinweises auf die Patenterteilung : **30.03.83 Patentblatt 83/13**

(45) Bekanntmachung des Hinweises auf die Entscheidung über den Einspruch : **20.01.88 Patentblatt 88/03**

(84) Benannte Vertragsstaaten :
**BE DE FR GB IT NL**

(56) Entgegenhaltungen :
**DE-A- 2 227 515**
**DE-A- 2 349 433**
**DE-A- 2 607 641**
**DE-B- 1 720 352**
**FR-A- 2 156 139**
**FR-A- 2 299 578**
**FR-A- 2 334 482**
**GB-A- 1 372 435**
**US-A- 3 924 651**
**Berichte zum 7. Kunststofftechnischen Kolloquium vom 20. und 21.03.1974 des Institutes für Kunststoffverarbeitung an der RWTH Aachen**
**K. Schwanitz "PUR-Verfahrensoptimierung für den Verarbeiter"**
**"Mechanische Untersuchungen an Kunststoffhartschäumen" von F. Knipschild Lehrstuhl und Institut für Kunststoffverarbeitung, Rhein.-Westfl. Technische Hochschule Aachen, o. Prof. Dr. Ing. G. Menges**

(73) Patentinhaber : **BAYER AG**
**Konzernverwaltung RP Patentabteilung**
**D-5090 Leverkusen 1 Bayerwerk (DE)**

**Maschinenfabrik Hennecke GmbH**
**D-5090 Leverkusen (DE)**

(72) Erfinder : **Boden, Heinrich**
**Sperberweg 14**
**D-5090 Leverkusen 3 (DE)**
Erfinder : **Niggemann, Johann**
**Gutenbergstrasse 5**
**D-5090 Leverkusen 1 (DE)**
Erfinder : **Rentz, Bernhard**
**Halenseestrasse 5**
**D-5090 Leverkusen 1 (DE)**
Erfinder : **Raffel, Reiner**
**Schwarzer Weg 19**
**D-5200 Siegburg (DE)**
Erfinder : **Althausen, Ferdinand**
**Niederwennerscheid 48**
**D-5206 Neunkirchen-Seelscheid 1 (DE)**

(74) Vertreter : **Müller, Heinz-Gerd, Dipl.-Ing. et al**
**BAYER AG Konzernverwaltung RP Patentabteilung**
**D-5090 Leverkusen 1, Bayerwerk (DE)**

EP 0 024 608 B2

## Beschreibung

Die Erfindung richtet sich auf ein Verfahren und eine Einrichtung zum Herstellen von Formteilen aus einem Massiv- oder Schaumstoff bildenden, fließfähigen Reaktionsgemisch durch dosiertes Einspritzen von fließfähigen Reaktionskomponenten in eine Mischzone, aus der das fertige Reaktionsgemisch in einen Formwerkzeughohlraum eingefüllt wird.

Einspritzdüsen sind bekannt ; und zwar sowohl als zum Teil abquetschbare Lochdüsen (US-A-3 263 928) als auch als Ringspaltdüsen, (FR-A-2 299 578, US-A-3 924 651) bei denen eine axial verstellbare, konzentrisch im Düsengehäuse angeordnete Nadel mit der konzentrischen Düsenöffnung des Düsengehäuses einen veränderlichen, durch einen verstellbaren Anschlag fixierbaren Spalt zur Injektionsmischkammer freigibt. Aus der Düsenöffnung bzw. dem Ringspalt tritt die Reaktionskomponente in bekannter Weise in eine Injektionsmischkammer ein, in der sie mit einer zweiten, in gleicher Weise zugeführten Reaktionskomponente vermischt wird. Die für die Injektionsvermischung erforderliche Energie ist hierbei weitgehend abhängig von der Strömungsgeschwindigkeit, der Viskosität, der Lösungsaffinität und dem Dosierverhältnis der zu vermischenden Reaktionskomponenten zueinander. Neben dem Abstand und der Lage der Einspritzdüsen zueinander als Konstanten haben zwangsläufig die Form und vor allem der Querschnitt der Düsenöffnungen bzw. der Durchströmquerschnitt entscheidenden Einfluß auf das Mischergebnis. Die Düsenöffnungen bzw. deren freier Querschnitt werden bei den bekannten, oben beschriebenen Ringspaltdüsen von Hand vor dem nächsten Einspritzvorgang nach weitgehend subjektiver Beurteilung des Mischergebnisses auf die Strömungsgeschwindigkeit und Viskosität der durchströmenden Reaktionskomponenten abgestimmt, durch axiale Verstellung und Fixierung der Düsennadel, ebenso die Dosiermenge je Zeiteinheit.

Es hat sich hierbei als hilfreich erwiesen, den zwischen Dosierpumpe und Einspritzdüse aufgebauten hydraulischen Druck als Maß für die zur Injektionsvermischung zur Verfügung stehende Mischenergie zu verwenden. Der für die Vermischung minimal notwendige Druck ist abhängig von den obengennanten Parametern. Er liegt normalerweise zwischen 50 und 150 bar, kann in Sonderfällen aber bis zu 350 bar und darüber betragen. Da Abweichungen von dem als optimal ermittelten Arbeitsdruck im Dosiersystem Beeinträchtigungen im Mischergebnis nach sich ziehen, arbeitet man bei der Injektionsvermischung zur Zeit vorzugsweise mit konstanter, fest eingestellter Dosiergeschwindigkeit und Viskosität der Reaktionskomponenten und ebenso mit dar- auf abgestimmtem, konstantem, fest eingestelltem Öffnungsquerschnitt der zugeordneten Einspritzdüsen.

Mit dieser Verfahrensweise ist eine Änderung der Dosiermenge je Zeiteinheit der Reaktionskomponenten während des Einspritzvorgangs, beispielsweise mit dem Ziele, die Dosiermenge der resultierenden Mehrkomponentenreaktionsmischung optimal auf die geometrischen Bedingungen innerhalb der Formwerkzeughohlräume während des Formfüllvorganges abstimmen zu können, nicht möglich.

Aufgabe der Erfindung ist es, beim Einsatz von Injektionsmischern während eines Formfüllvorganges eine auf die geometrischen Bedingungen innerhalb des Formwerkzeughohlraumes abgestimmte Befüllung mit — gegebenenfalls hochaktivierten — Mehrkomponentenreaktionswerkstoffen ohne Beeinträchtigung der Mischgüte der in den Injektionsmischern hergestellten Reaktionsmischung zu ermöglichen.

Diese Aufgabe wird dadurch gelöst, daß

a) die Dosiermenge je Zeiteinheit mindestens einer der Reaktionskomponenten während des Einspritzvorganges geändert wird, und

b) der zugehörige Einspritzquerschnitt bzw. die Einspritzquerschnitte in die Mischzone synchron zur Änderung der Dosiermenge je Zeiteinheit verändert wird bzw. werden.

Dadurch wird erreicht, daß der Einfüllvorgang des fließfähigen Reaktionsgemisches in den Formwerkzeughohlraum so sorgfältig abgestimmt werden kann, daß die gefährlichen Überwälzungen mit Einschlagen von Luft, was zu unerwünschter Blasenbildung führt, vermieden werden. Die Erfindung gibt also erstmalig Gelegenheit, bei der Injektionsvermischung im Durchlaufverfahren über die Dauer der Füllzeit das Einbringen des Reaktionsgemisches zu optimieren was mit den bekannten Vorrichtungen gemäß FR-A-2 299 578 und US-A-3 924 651 nicht möglich ist.

Vorzugsweise wird dabei die Einströmungsgeschwindigkeit der Komponenten in die Mischzone konstant gehalten.

Dadurch werden auch konstante Mischbedingungen erzielt.

Die erfindungsgemäße Einrichtung zum Durchführen des Verfahrens geht aus von Vorratsbehältern, von denen Zuleitungen über in ihrer Dosierleistung einstellbare Dosierpumpen zu einem Mischkopf führen und über Einspritzdüsen, welche axial verschiebbare Düsennadeln, die verstellbar anschlagbegrenzt sind, aufweisen, in eine mit einer Auslaßöffnung versehenen Mischkammer münden, deren Auslaßöffnung mit einem Formwerkzeughohlraum eines Formwerkzeuges verbunden ist.

Das Neue ist darin zu sehen, daß jeder Düsennadel mindestens zwei verstellbare, hubbegrenzende Anschläge zugeordnet sind und daß ein Steuergerät vorgesehen ist, dessen Impulsleitungen zu den Antrieben der Dosierpumpen und zu Servomotoren zum Betätigen von Steuerventilen für das Steuern eines Ausstoßkolbens, der Düsennadeln und von Anschlägen führen.

Dabei entspricht jede vorgegebene Stellung der Anschläge einer bestimmten Stellung der Düsennadel im Moment des Anliegens an den Anschlag und charakterisiert damit einen bestimmten Öffnungsquerschnitt der Düse, der einer vorher ermittelten Dosiergeschwindigkeit entspricht. Dadurch wird erzielt, daß mittels der vorgegebenen Anschläge die entsprechende Stellung der Düssennadeln und damit der gewünschten Öffnungsquerschnitte der Düsen einstellbar ist.

Die Eingabe eines Programms in das Steuergerät erlaubt eine gewünschte Beeinflussung des Mischvorganges. Für jedes Reaktionssystem kann dabei ein optimiertes Programm vorgegeben werden.

Die Steuerung erfolgt in Abhängigkeit von der Dosiermenge der Reaktionskomponenten je Zeiteinheit, beispielsweise über die Hubgeschwindigkeit bzw. Hubzahl der zugeordneten Dosierpumpe, oder in Abhängigkeit vom hydraulischen Druck im Dosiersystem. Durch die Einstellbarkeit der Anschläge mittels Servomotoren wird die Beeinflussung und Abstimmung auf unterschiedliche Formwerkzeuge möglich. Solche Maßnahmen sind besonders vorteilhaft in der Großserienfertigung von Formteilen unterschiedlicher Größe und Geometrie auf einer Fertigungsstraße.

Die Erfindung erlaubt, sowohl mindestens zwei Einspritzdüsen für mindestens zwei Reaktionskomponenten synchron zu betätigen als auch nur eine Einspritzdüse in Verbindung mit der Änderung der Dosiergeschwindigkeit nur einer der beteiligten Reaktionskomponenten umzusteuern.

Im ersten Falle besteht hiermit die zusätzliche Möglichkeit, eine synchrone Änderung der Dosiergeschwindigkeit aller beteiligten Reaktionskomponenten unter Konstanthaltung des Dosierverhältnisses zwischen diesen Reaktionskomponenten bei einwandfreier Mischgüte der resultierenden Reaktionsmischung während beispielsweise eines Formfüllvorganges durchzuführen, und zwar bei Änderung der Dosiergeschwindigkeit um mehr als 10 % bis auf 20 % einer vorgesehenen Maximaldosiergeschwindigkeit, d. h., es ist eine maximale Änderung von 80 % möglich.

Im zweiten Falle erlaubt dieses Verfahren die gesteuerte Veränderung des Dosierverhältnisses, beispielsweise von Polyurethanreaktionskomponenten zueinander, während eines Schusses. Durch diese Verschiebung der « Kennzahl » ist eine gezielte Änderung der Eigenschaften innerhalb eines zu fertigenden Formteils erreichbar. Die Erfindung läßt sich sowohl auf Einrichtungen anwenden, deren Mischkopf einen Steuer- und/oder Reinigungskolben aufweist, als auch auf solche, deren Mischkopf mit den Rücklauf steuernden Einspritzdüsen versehen ist.

Sowohl die konstruktive Ausführungsform der Anschläge als auch deren Steuerung lassen dem Fachmann vielerlei Ausführungsformen offen.

Die neue Einrichtung ist in zwei Ausführungsbeispielen schematisch dargestellt und nachstehend näher erläutert. Es zeigen :

Figur 1 eine Injektionsmischeinrichtung mit verstellbaren Einspritzdüsen und einem Steuer-und Ausstoßkolben, der Vor- und Rücklauf steuert, und

Figur 2 eine Injektionsmischeinrichtung mit hydraulisch betätigbaren Einspritzdüsen, bei denen der Vor- und Rücklauf über diese Einspritzdüsen gesteuert werden.

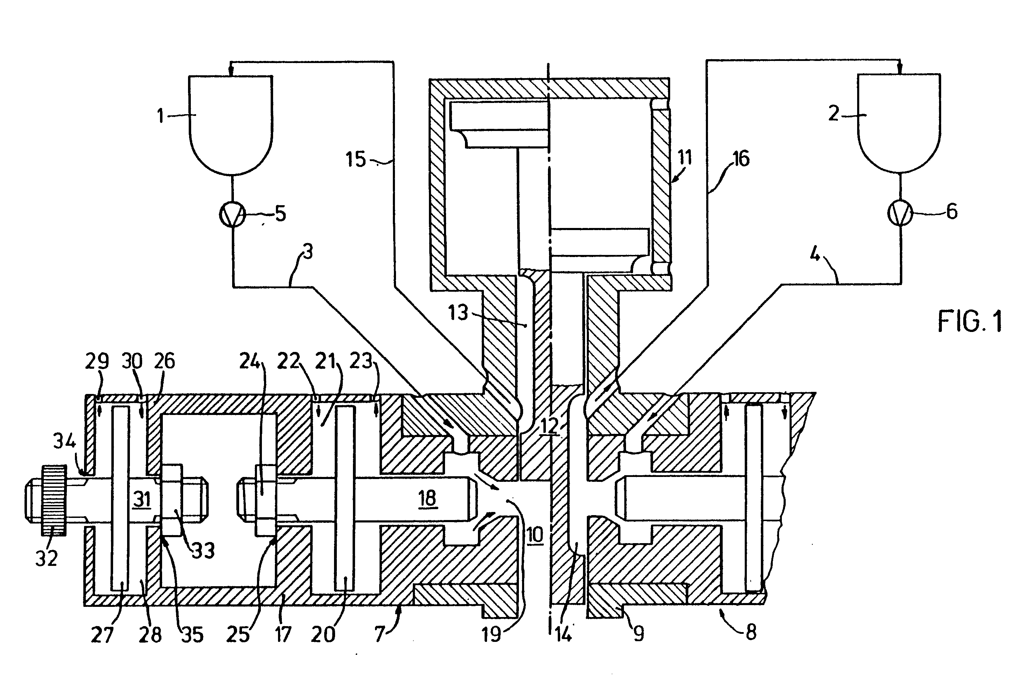

In Fig. 1 besteht die Einrichtung aus Vorratsbehältern 1, 2. Von ihnen führen Zuleitungen 3, 4, in denen Dosierpumpen 5, 6 zwischengeschaltet sind, zu Einspritzdüsen 7, 8, die in eine in einem Mischkopfgehäuse 9 angeordnete Mischkammer 10 münden. In der Mischkammer 10 ist ein mittels eines hydraulischen Antriebs 11 bewegbarer Steuer- und Ausstoßkolben 12 geführt, der Kreislaufnuten 13, 14 aufweist. Der Ausstoßkolben 12 ist mit seiner linken Hälfte in Mischstellung, mit seiner rechten Hälfte in Ausstoßstellung gezeigt. In der Ausstoßstellung sind die Kreislaufnuten 13, 14 über Rückleitungen 15, 16 mit den Vorratsbehältern 1, 2 verbunden.

Die Einspritzdüse 7 für die erste Komponente umfaßt im wesentlichen das Düsengehäuse 17, die Düsennadel 18 und die Düsenöffnung 19 sowie den hydraulischen Antrieb, bestehend aus einem mit der Düse 18 verbundenen, doppelseitig beaufschlagbaren Kolben 20 und den Hydraulikzylinder 21 nebst Zuleitungen 22, 23. Die Düsennadel 18 ist an ihrem hinteren Ende mit einer als Anschlag 24 dienenden Stellmutter versehen, mit der der minimale freie Durchströmquerschnitt zur Düsenöffnung 19 einstellbar ist. Die Stellmutter 24 liegt in der gezeigten Stellung gegen die Gehäusefläche 25 an. Das Düsengehäuse 17 ist zu einer Verlängerung 26 ausgeweitet, in der eine Hydraulikeinheit aus Kolben 27 und Zylinder 28 angeordnet ist. Die Zuleitungen sind mit 29, 30 bezeichnet. Die Kolbenstange 31 ist beidseitig durch die Verlängerung 26 nach außen geführt und trägt an beiden Enden als verstellbare Anschläge 32, 33 dienende Stellmuttern. Sie schlagen gegen Gehäuseflächen 34, 35 an. Die Stellmutter 32 dient einer mittleren Stellung der Düsennadel 18 mit einem zugeordneten mittleren freien Durchströmquerschnitt, indem der Kolben 27 über die Zuleitung 29 und der Kolben 20 über die Zuleitung 23 beaufschlagt werden. Der mittels der Stellmutter 33 eingestellte Maximalhub mit größtem Öffnungsquerschnitt wird erreicht, indem der Kolben 20 ebenfalls über die Zuleitung 23 beaufschlagt wird, der Kolben 27 jedoch über die Zuleitung 30. Die Einspritzdüse 7 ist also mit drei Anschlägen 24, 32, 33 versehen. Die Einspritzdüse 8 für die zweite Komponente ist analog aufgebaut wie die Einspritzdüse 7.

Der hydraulische Kolben 27 ist bei gleichem hydraulischem Steuerdruck für alle Steuervorgänge an der Einspritzdüse 7 mit einer gegenüber der Druckfläche des Kolbens 20 größeren Fläche ausgerüstet und/oder er wird mit einem höheren Druck beaufschlagt als der Kolben 20, damit die Düsennadel 18 in der mittleren Stellung gehalten werden kann.

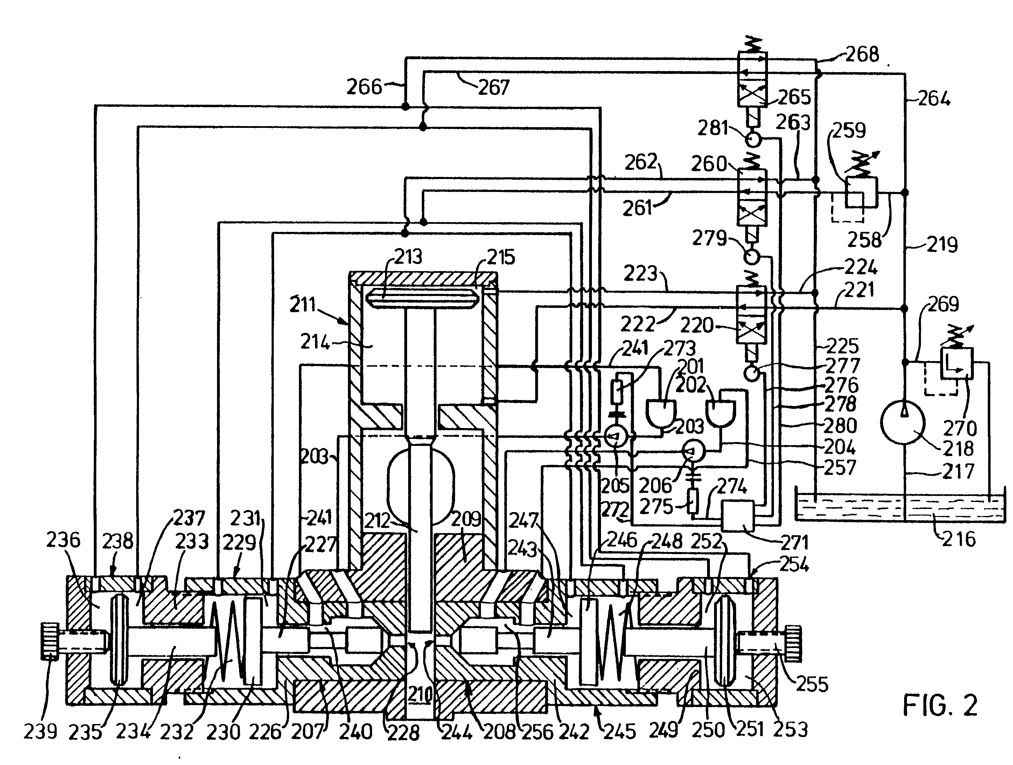

In Fig. 2 besteht die Einrichtung aus Vorratsbehältern 201, 202. Von ihnen führen Zuleitungen 203, 204, in denen Dosierpumpen 205, 206 zwischengeschaltet sind, zu Einspritzdüsen 207, 208, die in eine in einem Mischkopfgehäuse 209 angeordnete Mischkammer 210 münden. In der Mischkammer 210 ist ein mittels eines hydraulischen Antriebs 211 bewegbarer Ausstoßkolben 212 geführt.

Er weist an seinem anderen Ende einen beidseitig beaufschlagbaren Hydraulikkolben 213 auf, wobei sich zu jeder Seite eine Hydraulikkammer 214, 215 befindet. Von einem Hydraulikflüssigkeitsreservoir 216 führt eine Saugleitung 217 zu einer Hydraulikpumpe 218, von der eine Druckleitung 219 weiterführt. Ein Steuerventil 220 ist über eine Leitung 221 mit ihr verbunden. Das Steuerventil 220 ist so geschaltet, daß die Leitung 221 über eine Leitung 222 mit der Hydraulikkammer 214 in Verbindung steht. Von der Kammer 215 führt eine Leitung 223 zum Ventil 220. Von jenem führt eine Leitung 224 zur Rücklaufleitung 225, die in das Reservoir 216 mündet. In der nicht dargestellten anderen Stellung des Steuerventils 220 ist die Leitung 221 mit der Leitung 223 und die Leitung 222 mit der Leitung 224 verbunden, um die Kammer 215 zu beaufschlagen, wodurch durch Vorschub des Ausstoßkolbens 212 der inhalt der Mischkammer 210 ausgestoßen wird.

Die Einspritzdüse 207 für die erste Komponente umfaßt im wesentlichen das Düsengehäuse 226, die Düsennadel 227 und die Düsenöffnung 228 sowie den hydraulischen Antrieb 229, bestehend aus einem mit der Düssennadel 227 verbundenen, doppelseitig beaufschlagbaren Kolben 230, zu dessen beiden Seiten Hydraulikkammern 231, 232 angeordnet sind.

Das Düsengehäuse 226 weist eine koaxiale, verstellbare Schraube 233 auf, in der koaxial zur Düsennadel 227 ein als Nadel ausgebildeter Anschlag 234 geführt ist, dessen hinteres Ende als doppelseitig beaufschlagbarer, hydraulischer Kolben 235 zusammen mit den Hydraulikkammern 236, 237 den hydraulische Antrieb 238 bildet. Der minimale Hub der Düsennadel 227 wird durch Verstellen der Schraube 233 einjustiert. Mittels einer weiteren Stellschraube 239 läßt sich der maximale Hub der Düsennadel 227 einstellen.

Die über die Leitung 203 geführte Komponente strömt im Kreislauf über den zwischen Düsennadel 227 und Düsengehäuse 226 vorgesehenen Ringraum 240 in die Rücklaufleitung 241, die in den Vorratsbehälter 201 mündet. Durch Umsteuern der Düsennadel 227 mittels des hydraulischen Antriebs 229 fährt die Düsennadel 227 gegen den Anschlag 234, verschließt den Ringraum 240 und gibt dabei die Düsenöffnung 228 frei, so daß die Komponente in die Mischkammer 210 einströmen kann.

Die Einspritzdüse 208 für die zweite Komponente ist analog aufgebaut und umfaßt im wesentlichen das Düsengehäuse 242, die Düsennadel 243 und die Düsenöffnung 244 sowie den hydraulischen Antrieb 245, bestehend aus einem mit der Düsennadel 243 verbundenen, doppelseitig beaufschlagbaren Kolben 246, zu dessen beiden Seiten Hydraulikkammern 247, 248 angeordnet sind. Das Düsengehäuse 242 weist eine verstellbare Schraube 249 auf, in der koaxial zur Düsennadel 243 eine Anschlagnadel 250 geführt ist, deren hinteres Ende als doppelseitig beaufschlagbarer, hydraulischer Kolben 251 zusammen mit den Hydraulikkammern 252, 253 den hydraulischen Antrieb 254 bildet. Der minimale Hub der Düsennadel 243 wird durch Verstellen der Schraume 249 eingestellt. Mittels einer weiteren Stellschraube 255 läßt sich der maximale Hub der Düsennadel 243 einstellen. Die durch die Leitung 204 zugeführte Komponente strömt im Kreislauf über den zwischen Düsennadel 243 und Düsengehäuse 242 vorgesehenen Ringraum 256 und gibt dabei die Düsenöffnung 244 frei, so daß die Komponente in die Mischkammer 210 einströmen kann.

Von der Druckleitung 219 zweigt eine Leitung 258, die ein Druckreduzierventil 259 enthält, ab, und führt zu einem Steuerventil 260. Von ihm führt eine sich verzweigende Leitung 261 zu den Hydraulikkammern 232, 248. Von den Hydraulikkammern 231, 247 führt eine sich vereinigende Leitung 262 zum Steuerventil 260. Dieses ist über eine Leitung 263 mit der Rückleitung 225 verbunden. Sollen die Hydraulikkammern 231, 247 beaufschlagt werden, um die Düsennadeln 227, 243 umzusteuern, so schaltet das Steuerventil 260 die Leitung 258 mit der Leitung 262 zusammen und verbindet gleichzeitig die Leitung 261 mit der Leitung 263.

Schließlich führt von der Druckleitung 219 noch eine Zweigleitung 264 zu einem Steuerventil 265. Von ihm führt eine sich verzweigende Leitung 266 zu den Hydraulikkammern 236, 253. Von den Hydraulikkammern 237, 252 führt eine sich vereinigende Leitung 267 zum Steuerventil 265, von .wo eine Zweigleitung 268 zur Rückleitung 225 führt. Sollen die Hydraulikkammern 236, 253 beaufschlagt werden, um die minimale Stellung der Düsennadeln 227, 243 zu ermöglichen, so verbindet das Steuerventil 265 durch Umschalten die Leitung 264 mit der Leitung 266, und die Leitung 267 mit der Leitung 268. Eine Überströmleitung 269, in der ein druckeinstellbares Überströmventil 270 angeordnet ist, führt in das Reservoir 216 zurück.

Sonach betätigt das Steuerventil 220 den Ausstoßkolben 212. Das Steuerventil 260 betätigt die Düsennadeln 227, 243 der zwangsgesteuerten Einspritzdüsen 207, 208 auf « Kreislauf » bzw. auf « Mischen ». Das Steuerventil 265 schließlich betätigt die Anschlagnadeln 234, 250 zum Einstellen der gewünschten Hubweite der Düsennadeln 227, 243. Die Schrauben 233, 249 sind in den Düsengehäusen 226, 242 mittels Gewinde (nicht beziffert) verstellbar gehalten, so daß sich die Hubweite der Düsennadeln 234, 243 für die Minimalstellung einstellen läßt.

Ein Steuergerät 271 erlaubt die Vorgabe eines Programms. Dementsprechend werden über im Steuergerät 271 enthaltene Zeituhren zu gewünschten Zeiten Impulse über die Impulsleitung 272 an den Antrieb 273 der Dosierpumpe 205 ; über die Impulsleitung 274 an den Antrieb 275 der Dosierpumpe 206 ; über die Impulsleitung 276 Impulse an den Servomotor 277 des Steuerventils 220 ; über die Impulsleitung 278 Impulse an den Servomotor 279 des Steuerventils 260 und über die Impulsleitung 280 Impulse an den Servomotor 281 des Steuerventils 265 gegeben.

## Patentansprüche

1. Verfahren zum Herstellen von Formteilen aus einem Massiv- oder Schaumstoff bildenden, fließfähigen Reaktionsgemisch durch dosiertes Einspritzen von fließfähigen Reaktionskomponenten in eine Mischzone, aus der das fertige Reaktionsgemisch in einen Formwerkzeughohlraum eingefüllt wird, dadurch gekennzeichnet, daß

a) die Dosiermenge je Zeiteinheit mindestens einer der Reaktionskomponenten während des Einspritzvorganges geändert wird und

b) der zugehörige Einspritzquerschnitt bzw. die Einspritzquerschnitte in die Mischzone synchron zur Änderung der Dosiermenge je Zeiteinheit verändert wird bzw. werden.

2. Verfahren nach Anspruch 1, dadurch gekennzeichnet, daß die Einströmgeschwindigkeit der Komponenten in die Mischzone im wesentlichen konstant gehalten wird.

3. Einrichtung zum Durchführen des Verfahrens nach den Ansprüchen 1 oder 2, bestehend aus Vorratsbehältern (1, 2 ; 201, 202), von denen Zuleitungen (3, 4 ; 203, 204) über in ihrer Förderleistung einstellbare Dosierpumpen (5, 6 ; 205, 206) zu einem Mischkopf (9 ; 209) führen und über Einspritzdüsen (7, 8 ; 207, 208), welche axial verschiebbare Düsennadeln (18 ; 227, 243), die verstellbar anschlagbegrenzt sind, aufweisen, in eine mit einer Auslaßöffnung versehene Mischkammer (10 ; 210) münden, deren Auslaßöffnung mit einem Formwerkzeughohlraum eines Formwerkzeuges verbunden ist, dadurch gekennzeichnet, daß jeder Düsennadel (18 ; 227, 243) mindestens zwei verstellbare, hubbegrenzende Anschläge (24, 32, 33 ; 234, 239, 250, 255) zugeordnet sind und daß ein Steuergerät (271) vorgesehen ist, dessen Impulsleitungen (272, 274, 276, 278, 280) zu den Antrieben (273, 275) der Dosierpumpen (205, 206) und zu Servomotoren (277, 279, 281) zum Betätigen von Steuerventilen (220, 260, 265) für das Steuern eines Ausstoßkolbens (212), der Düsennadeln (227, 243) und von Anschlägen (234, 250) führen.

## Claims

1. A method of producing moulded articles from a solid-forming or foam-forming flowable reaction mixture by metered injection of flowable reaction components into a mixing zone from which the finished reaction mixture is introduced into a mould cavity, characterised in that

a) the metering quantity per unit time of at least one of the reaction components is altered during the injection process and

b) the associated cross-section of injection or the cross-sections of injection into the mixing zone is/are altered synchronously with the change in the metered quantity per unit time.

2. A method according to Claim 1, characterised in that the entry rate of the components into the mixing zone is kept substantially constant.

3. A device for carrying out the method according to Claims 1 or 2, comprising storage containers (1, 2 ; 201, 202) from which feed pipes (3, 4 ; 203, 204) lead via metering pumps (5, 6 ; 205, 206) of adjustable output to a mixer head (9 ; 209) and merge via injection nozzles (7, 8 ; 207, 208), which have axially movable nozzle needles (18 ; 227, 243) which are adjustably limited by stops, into a mixing chamber (10 ; 210) provided with an outlet opening which is connected to a mould cavity of a mould, characterised in that each nozzle needle (18 ; 227, 243) is provided with at least two adjustable stroke-limiting stops (24, 32, 33 ; 234, 239, 250, 255) and in that a control instrument (271) is provided whose pulse-carrying lines (272, 274, 276, 278, 280) lead to the drive means (273, 275) of the metering pumps (205, 206) and to servomotors (277, 279, 281) to actuate control valves (220, 260, 265) for controlling an ejection piston (212), the nozzle needles (227, 243) and stops (234, 250).

## Revendications

1. Procédé de préparation de pièces moulées au départ d'un mélange de réaction fluide formant une matière pleine ou expansée, par injection dosée de composants de réaction fluides dans une zone de mélange, de laquelle le mélange de réaction achevé est introduit dans une cavité d'un appareil de moulage, caractérisé

a) en ce que la quantité de dosage par unité de temps de l'un au moins des composants de réaction est modifiée au cours de l'opération d'injection, et

b) en ce que la section transversale correspondante d'injection ou les sections transversales correspondantes d'injection dans la zone de mélange sont modifiées de façon synchrone par rapport à la modification de la quantité de dosage par unité de temps.

2. Procédé suivant la revendication 1, caractérisé en ce que la vitesse d'introduction des composants dans la zone de mélange est maintenue en substance constante.

3. Dispositif pour la mise en œuvre du procédé suivant les revendications 1 et 2, comportant des récipients d'emmagasinage (1, 2 ; 201, 202) desquels partent des conduits d'admission (3, 4 ; 203, 204) qui, en passant par des pompes de dosage (5, 6 ; 205, 206) dont le débit peut être réglé, aboutissent à une tête mélangeuse (9 ; 209), conduits qui, par des buses d'injection (7, 8 ; 207, 208) contenant des aiguilles de buses d'injection mobiles axialement (18 ; 227, 243), dont le déplacement est limité par des butées, débouchent dans une chambre de mélange (10 ; 210) présentant une ouverture de sortie laquelle est reliée à une cavité d'un appareil de moulage, caractérisé en ce qu'à chaque aiguille de buse d'injection (18 ; 227, 243), il est adjoint au moins deux butées mobiles de limite de course (24, 32, 33 ; 234, 239, 250, 255), et en ce qu'il est prévu un appareil de commande (271) dont des conducteurs d'impulsions (272, 274, 276, 278, 280) aboutissent aux commandes (273, 275) des pompes de dosage (205, 206) et à des servomoteurs (277, 279, 281) servant à l'actionnement de valves de commande (220, 260, 265) pour la commande d'un piston d'éjection (212), des aiguilles de buses d'injection (227, 243) et de butées (234, 250).

FIG. 1

0 024 608

FIG. 2